(19) **Europäisches Patentamt**
**European Patent Office**
**Office européen des brevets**

(11) **EP 4 586 174 A1**

(12) **EUROPEAN PATENT APPLICATION**

(43) Date of publication:
**16.07.2025   Bulletin 2025/29**

(51) International Patent Classification (IPC):
**G06Q 30/0202** *(2023.01)*      **G06Q 30/0204** *(2023.01)*
**G06Q 30/0251** *(2023.01)*      **G06Q 30/0601** *(2023.01)*

(21) Application number: **24223596.8**

(22) Date of filing: **30.12.2024**

(52) Cooperative Patent Classification (CPC):
**G06Q 30/0204; G06Q 30/0202; G06Q 30/0255;
G06Q 30/0631**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.01.2024   IN 202421002291**

(71) Applicant: **Tata Consultancy Services Limited
Maharashtra (IN)**

(72) Inventors:
• **VINNAKOTA, Tirumala Rao
Hyderabad, Telangana 500081 (IN)**
• **GUGULOTHU, Narendhar
Hyderabad, Telangana 500081 (IN)**
• **BHAT, Sanjay Purushottam
Hyderabad, Telangana 500081 (IN)**
• **SWAMI, Aakash
New Delhi 110001 (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR RECOMMENDATION OF ANCILLARY BUNDLE OFFERS FOR SEGMENTED CUSTOMERS**

(57)    The embodiments of present disclosure herein address unresolved problem of how to make optimized decisions jointly on ancillary bundles recommendation and optimal ancillary bundle pricing using data in order to increase the traffic and maximize revenues remains challenging. Embodiments herein provide a method and system for generating ancillary bundled offers by jointly optimizing the customer bundle preferences of ancillary product bundles and revenue maximizing bundle prices for segmented customers using customers' historical ancillary purchase data. The historical ancillary purchase data can include historical bundles purchase data, or historical items purchase data depending upon the service provider, whether they offer bundles or items only. The overall flow of the disclosure for recommending *top-k* ancillary bundle offers for segmented customers by jointly optimizing the ancillary bundle products/services and bundle pricing for existing and new customers is provided.

FIG. 2

EP 4 586 174 A1

**Description**

CROSS-REFERENCE TO RELATED APPLICATIONS AND PRIORITY

The present application claims priority from Indian patent application number 202421002291, filed on January 11, 2024.

TECHNICAL FIELD

The disclosure herein generally relates to the field of recommender systems, and more particularly, a method and system for recommending ancillary bundled offers for segmented customers by jointly optimizing the customer bundle preferences of ancillary product bundles and revenue maximizing bundle prices using customers' historical ancillary purchase data.

BACKGROUND

Many service industries offer main services as well as ancillary services that go with main service. It is up to the customer to choose whatever ancillary services they need and purchase them. Most of the times, the absence of purchased ancillaries could indicate either customer's may not be aware of the full list of what all ancillaries are available (customer have not seen them), customer saw them, but did not prefer them, or customer saw them, liked them but did not purchase yet. At the same time, service providers also lose a lot of revenue due to non-purchase of ancillary services.
However, the problem of how to make optimized decisions jointly on customer ancillary bundles preferences and optimal ancillary bundle pricing using data in order to increase the traffic and maximize revenues remains challenging. For example, how to create an airline ancillary bundled offer consisting of air ancillary products like Food, Drinks, In-flight entertainment, Priority boarding, Internet Wi-Fi, Seat upgrade, Exit Seat, Express Check-in, Excess Baggage, Seat Assignment etc., and in the case of hotels, ancillaries like Meal's reservation, Room upgrades, Early check-in, Late check-out, Internet Wi-Fi, Tour and leisure activities, Live event tickets, Spa, Golf, Fitness center etc. Similarly for rental cars and other service businesses or even consumer retail products. This problem becomes even more challenging in most cases, as these perishable products have to be sold before expiry.
Existing solutions consider only limited or very few bundles, also without any diversity and also not scalable. These solutions also have these limitations: Lack of modeling customers/segment of customers and bundle interactions and thereby fail learning to rank based on bundles as only customer and item interactions are modeled in a multi-task manner, lack modeling of pairwise bundle interactions, lack granular segmentation that distinguishes various customer segments based on their ancillary bundle purchase behavior. Further in existing solutions pricing is rarely considered and when considered, most bundle Pricing of current technology is based on only discounts rather than optimized for maximum bundle revenue.

SUMMARY

Embodiments of the present disclosure present technological improvements as solutions to one or more of the above-mentioned technical problems recognized by the inventors in conventional systems. For example, in one embodiment, a method for generating ancillary bundled offers by jointly optimizing the customer bundle preferences of ancillary product bundles and revenue maximizing bundle prices for segmented customers using customers' historical ancillary purchase data is provided. The processor-implemented method includes receiving, via an input/output interface a historical data of (i) one or more ancillary items, or (ii) one or more ancillary bundles purchased by one or more customers as input. The system received historical data to recognize one of (i) a single ancillary item, or (ii) a combination of two or more ancillary items, or (iii) one or more ancillary bundles purchased by the one or more customers. Further, the processor-implemented method includes converting if the historical data is recognized as single ancillary item, or the combination of two or more ancillary items purchased together into a bundle of one or more ancillary items by assigning a bundle-identification to each of the one or more ancillary bundles. A customer feature vector is identified for each of the one or more customers from the received historical data of one or more ancillary items. A customer feature vector is a set of attributes that is dependent on the customer context. For example, in the context of the passenger airlines customer travel, customer feature vector is customer travel related attributes like number of travelers with the customer, month of travel, time of purchase of ticket, flight departure time, day of week of travel, flight journey hour, etc. In the context of hotels, customer feature vector can again be customer travel and stay related attributes like month of travel, number of adults and children traveling, day of week of travel, time of purchase, etc. Further, the processor-implemented method includes identifying one or more existing customers, and one or more new customers of the one or more customers based on the received historical data, wherein each of the one or more existing customers are identified based on a customer identification who has one or more ancillary items, or one or more ancillary bundles purchase history. Further, each of the one or more existing customers is segmented into one or more segments based on a Similar Preferred Bundles Customer Segmentation (SPBCS) technique to recommend one or more unique set of bundles of ancillary items.

Furthermore, the processor-implemented method comprises ranking one or more set of bundles of ancillary items for the each of the one or more segments using Segmented Customer Bayesian Personalized Ranking Learning to Rank technique (SCBPR-LTR) and pricing the ranked one or more set of bundles of ancillary items for the identified customer segments using Segmented Customer Optimal Bundle Pricing (SCOBP) technique. The outputs of SCBPR-LTR technique and SCOBP technique is jointly optimized considering customer ancillary bundle preferences and revenue maximizing optimal bundle prices for each segment of the one or more existing customers to recommend the jointly optimized one or more set of bundles of ancillary items to the segmented each of the one or more existing customers.

In another embodiment, a system for generating ancillary bundled offers by jointly optimizing the customer bundle preferences of ancillary product bundles and revenue maximizing bundle prices for segmented customers using customers' historical ancillary purchase data is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive a historical data of (i) one or more ancillary items, or (ii) one or more ancillary bundles purchased by one or more customers as input. The system received historical data to recognize one of (i) a single ancillary item, or (ii) a combination of two or more ancillary items, or (iii) one or more ancillary bundles purchased by the one or more customers. Further, one or more hardware processors are configured by the instructions to convert if the historical data is recognized as single ancillary item, or the combination of two or more ancillary items purchased together into a bundle of one or more ancillary items by assigning a bundle-identification to each of the one or more ancillary bundles. A customer feature vector is identified for each of the one or more customers from the received historical data of one or more ancillary items. A customer feature vector is a set of attributes that is dependent on the customer context. For example, in the context of the passenger airlines customer travel, customer feature vector is customer travel related attributes like number of travelers with the customer, month of travel, time of purchase of ticket, flight departure time, day of week of travel, flight journey hour, etc. In the context of hotels, customer feature vector can again be customer travel and stay related attributes like month of travel, number of adults and children traveling, day of week of travel, time of purchase, etc. Further, the one or more hardware processors are configured by the instructions to identify one or more existing customers, and one or more new customers of the one or more customers based on the received historical data, wherein each of the one or more existing customers are identified based on a customer identification who has one or more ancillary items, or one or more ancillary bundles purchase history. Further, each of the one or more existing customers is segmented into one or more segments based on a Similar Preferred Bundles Customer Segmentation (SPBCS) technique to recommend one or more unique set of bundles of ancillary items.

Furthermore, the one or more hardware processors are configured by the instructions to rank one or more set of bundles of ancillary items for the each of the one or more segments using Segmented Customer Bayesian Personalized Ranking Learning to Rank technique (SCBPR-LTR) and pricing the ranked one or more set of bundles of ancillary items for the identified customer segments using Segmented Customer Optimal Bundle Pricing (SCOBP) technique. The outputs of SCBPR-LTR technique and SCOBP technique is jointly optimized considering customer ancillary bundle preferences and revenue maximizing optimal bundle prices for each segment of the one or more existing customers to recommend the jointly optimized one or more set of bundles of ancillary items to the segmented each of the one or more existing customers.

In yet another aspect, there are provided one or more non-transitory machine-readable information storage mediums comprising one or more instructions, which when executed by one or more hardware processors causes a method for generating ancillary bundled offers by jointly optimizing the customer bundle preferences of ancillary product bundles and revenue maximizing bundle prices for segmented customers using customers' historical ancillary purchase data. The processor-implemented method includes receiving, via an input/output interface a historical data of (i) one or more ancillary items, or (ii) one or more ancillary bundles purchased by one or more customers as input. The system received historical data to recognize one of (i) a single ancillary item, or (ii) a combination of two or more ancillary items, or (iii) one or more ancillary bundles purchased by the one or more customers. Further, the processor-implemented method includes converting if the historical data is recognized as single ancillary item, or the combination of two or more ancillary items purchased together into a bundle of one or more ancillary items by assigning a bundle-identification to each of the one or more ancillary bundles. A customer feature vector is identified for each of the one or more customers from the received historical data of one or more ancillary items. A customer feature vector is a set of attributes that is dependent on the customer context. For example, in the context of the passenger airlines customer travel, customer feature vector is customer travel related attributes like number of travelers with the customer, month of travel, time of purchase of ticket, flight departure time, day of week of travel, flight journey hour, etc. In the context of hotels, customer feature vector can again be customer travel and stay related attributes like month of travel, number of adults and children traveling, day of week of travel, time of purchase, etc. Further, the processor-implemented method includes identifying one or more existing customers, and one or more new customers of the one or more customers based on the received historical data, wherein each of the one or more existing customers are identified based on a customer identification who has one or more ancillary items, or one or more ancillary bundles purchase history. Further, each of the one or more existing customers is segmented into one or more segments based on a Similar Preferred Bundles Customer Segmentation (SPBCS) technique to recommend one or more unique set of bundles of ancillary items.

Furthermore, the processor-implemented method comprises ranking one or more set of bundles of ancillary items for the each of the one or more segments using Segmented Customer Bayesian Personalized Ranking Learning to Rank technique (SCBPR-LTR) and pricing the ranked one or more set of bundles of ancillary items for the identified customer segments using Segmented Customer Optimal Bundle Pricing (SCOBP) technique. The outputs of SCBPR-LTR technique and SCOBP technique is jointly optimized considering customer ancillary bundle preferences and revenue maximizing optimal bundle prices for each segment of the one or more existing customers to recommend the jointly optimized one or more set of bundles of ancillary items to the segmented each of the one or more existing customers.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for generating ancillary bundled offers by jointly optimizing the customer bundle preferences of ancillary product bundles and revenue maximizing bundle prices for each of the one or more segments of one or more customers, according to some embodiments of the present disclosure.

FIG. 2 is a functional block diagram to illustrate a system for generating ancillary bundled offers by jointly optimizing the customer bundle preferences of ancillary product bundles and revenue maximizing bundle prices for each of the one or more segments of one or more customers, according to some embodiments of the present disclosure.

FIG. 3 is a schematic diagram to show an ancillary bundle offers recommendation system database (ABORS-DB), according to some embodiments of the present disclosure.

FIG. 4A and 4B is an exemplary flow diagram illustrating a processor-implemented method for generating ancillary bundled offers by jointly optimizing the customer bundle preferences of ancillary product bundles and revenue maximizing bundle prices for each of the one or more segments of one or more existing customers, according to some embodiments of the present disclosure.

FIG. 5 is a functional block diagram to illustrate the schematic of a Segmented Customer Bayesian Personalized Ranking Learning to Rank technique (SCBPR-LTR), according to some embodiments of the present disclosure.

FIG. 6 shows an example of relative preference data generation for three segments, according to some embodiments of the present disclosure.

FIG. 7 is a flow chart to illustrate a Segmented Customer Optimal Bundle Pricing (SCOBP) technique, according to some embodiments of the present disclosure.

FIG. 8 is a functional block diagram to show details for the existing and new customer recommendation of ancillary bundles, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Many service industries offer main services as well as ancillary services that go with main service. It is up to the customer to choose whatever ancillary services they need and purchase them. Most of the times, the absence of purchased ancillaries could indicate either customer's may not be aware of the full list of what all ancillaries are available (customer have not seen them), customer saw them, but did not prefer them, or customer saw them, liked them but did not purchase yet. At the same time, service providers also lose a lot of revenue due to non-purchase of ancillary services.

In the airline industry, ancillary revenue is revenue from non-ticket sources, such as meals, drinks, checked baggage, extra leg room, etc. Ancillary revenue ranges anywhere from 20 percent of total revenue for major airlines to 50 percent for low-cost carriers.

Ancillary revenue has become a major revenue stream and an important driver for increasing revenues for many service businesses. Due to rapid technological developments in online markets, e-commerce service providers and retailer businesses are expected to increasingly leverage the technological developments especially Artificial Intelligence (AI) and Machine Learning (ML) to create and control their service offers especially the ancillary service offerings that go together with the main service. For example, in an airline, the seat is the main service, and the ancillary services are meals, drinks, etc. Similarly, in hotels, room is the main service and ancillary services are breakfast, meals, etc. There is a need to significantly enrich consumers, shopping experience by providing segmented levels of personalization, and also allow businesses to evolve from being commodity suppliers to becoming modern digital service retailers. In the process, service provider businesses can provide greater value to their customers while increasing their own revenues/profits.

However, the problem of how to make optimized decisions jointly on customer ancillary bundles preferences and optimal ancillary bundle pricing using data in order to increase the traffic and maximize revenues remains challenging. For example, how to create an airline ancillary bundled offer consisting of air ancillary products like Food, Drinks, In-flight entertainment, Priority boarding, Internet Wi-Fi, Seat upgrade, Exit Seat, Express Check-in, Excess Baggage, Seat Assignment etc., and in the case of hotels, ancillaries like Meal's reservation, Room upgrades, Early check-in, Late check-out, Internet Wi-Fi, Tour and leisure activities, Live event tickets, Spa, Golf, Fitness center etc. Similarly for rental cars and other service businesses or even consumer retail products. This problem becomes even more challenging in most cases, as these perishable products have to be sold before expiry.

Embodiments herein provide a method and system for generating ancillary bundled offers by jointly optimizing the customer bundle preferences of ancillary product bundles and revenue maximizing bundle prices for segmented customers using customers' historical ancillary purchase data. The historical ancillary purchase data can include historical bundles purchase data, or historical items purchase data depending upon the service provider, whether they offer bundles or items only. The overall flow of the disclosure for recommending top-k ancillary bundle offers for segmented customers by jointly optimizing the ancillary bundle products/services and bundle pricing for existing and new customers is provided.

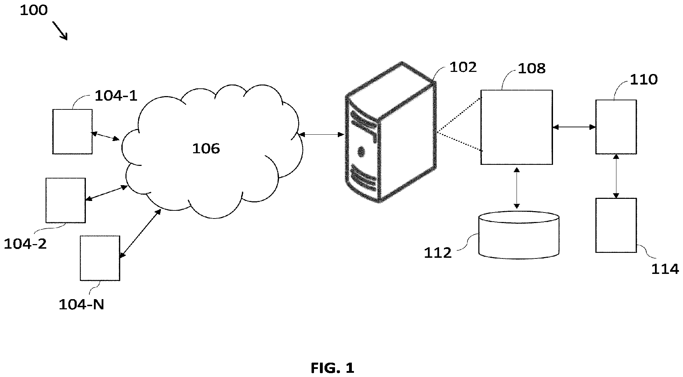

Referring now to the drawings, and more particularly to FIG. 1 through FIG. 8, where similar reference characters denote corresponding features consistently throughout the figures, there are shown preferred embodiments, and these embodiments are described in the context of the following exemplary system and/or method.

FIG. 1 illustrates a block diagram of a system for generating ancillary bundled offers by jointly optimizing the customer bundle preferences of ancillary product bundles and revenue maximizing the ancillary bundle's price, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH®, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The plurality of modules 114 include a data handling module 116, a segmentation module 118, an ancillary bundled products/services recommendation module 120, a pricing module 122, a new customer handling module 124, and ancillary bundles offer presentation module 126. The components and functionalities of the system 100 are described further in detail.

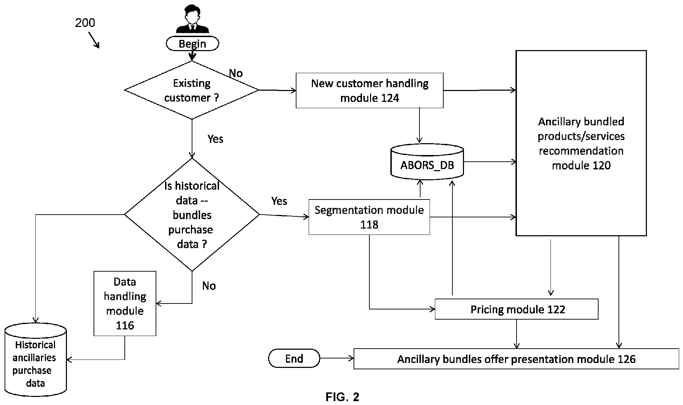

FIG. 2 is a functional block diagram 200 to illustrate the system 100 for generating ancillary bundled offers by jointly optimizing the customer bundle preferences of ancillary product bundles and revenue maximizing the ancillary bundle's price, according to some embodiments of the present disclosure. In one embodiment, the system 100 is configured to recommend *top-k* ancillary bundle offers for segmented customers by jointly optimizing the ancillary bundle products/services and bundle pricing for existing and new customers. The data handling module 116 of the system 100 is configured to convert the historical items only purchased data of customers into bundles data, when the service provides offers only ancillary items and not bundles. The segmentation module segments each of the one or more existing customers into one or more segments based on a Similar Preferred Bundles Customer Segmentation (SPBCS) technique.

The input to the segmentation module 118 is customer's ancillary bundle purchases. The output of the segmentation module 118 is the segment id, segment side features, ancillary bundles purchased in the segment, and customers present in the segment.

The Ancillary bundled products/services recommendation module 120 of the system 100 takes the output of the segmentation module i.e., segment, segment side feature, and ancillary bundles purchased in the segment as an input to the Segmented Customer Bayesian Personalized Ranking Learning to Rank technique, in short SCBPR-LTR technique and outputs the ancillary bundles recommendation for existing and new customer (without price). The Ancillary bundled products/services recommendation module 120 includes a relative bundle preference data generator and an optimizer. The relative bundle preference data generator converts segment bundles purchase data to relative bundle preference data that will be used as a training data set for the SCBPR-LTR technique. The optimizer optimizes the pair wise ranking loss function (SCBPR-OPT) using the training data generated to arrive at the preference ranking of bundles for all the segments of customers.

The pricing module 122 of the system 100 uses Segmented Customer optimal bundle pricing (SCOBP) technique to determine the optimal price of the recommended ancillary bundles for each segment that maximizes revenue. The module has two submodules for two sub technique defined under SCOBP technique. Using neural network based MLP model to learn the pricing parameter using the historical ancillary bundles or items purchase data and finding the revenue optimal price that maximizes revenue using optimization technique (Dual Annealing). The new customer handling module 124 of the system 100 is configured to recommend ancillary bundle offers for new customers, who do not have any ancillary items/bundles purchase history. The ancillary bundles offer presentation module 126 displays the final top-k offers by integrating the recommended ancillary bundled products from the Ancillary bundled products/services recommendation module and the prices of those ancillary bundled products from the pricing module 122. wherein top-k offers includes first k bundles from the list of ranked one or more bundles of ancillary items with optimal bundles price that maximizes revenue.

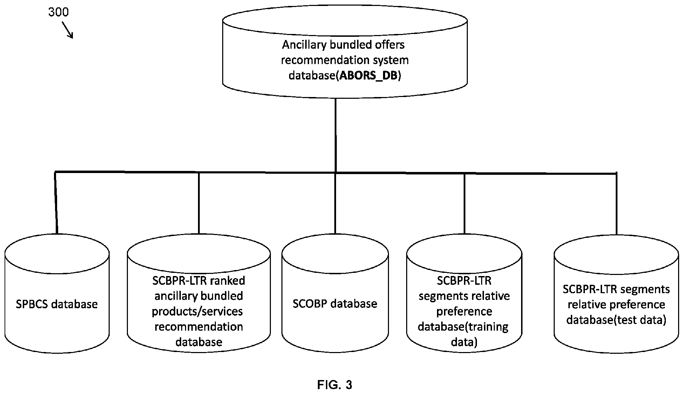

FIG. 3 illustrates an ancillary bundle offers recommendation system database (ABORS-DB). The main ABORS-DB database consists of SPBCS database that stores output from SPBCS technique, SCBPR-LTR ranked ancillary bundled products/services recommendation database that store ranked ancillary bundles for each segmented customer, SCOBP database store the optimal price of one or more ranked bundles of ancillary items for each segmented customer and SCBPR-LTR segments relative preference training and test data database that stores segments relative preference training data and test data.

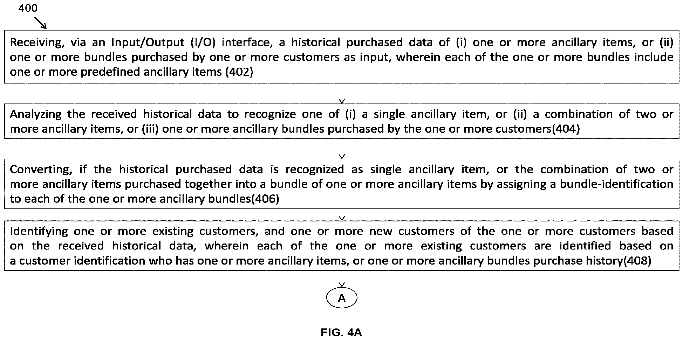

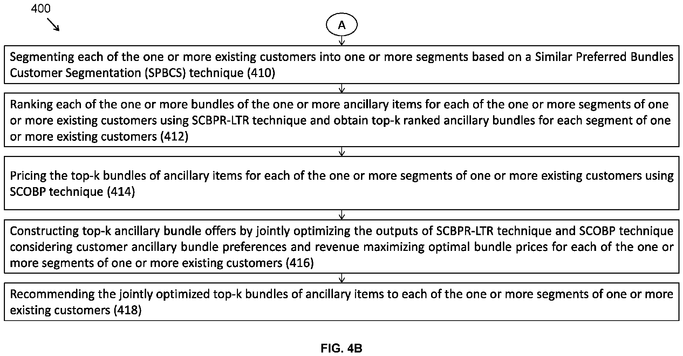

FIG. 4A and 4B (collectively referred as FIG. 4) is a flow diagram illustrating a processor-implemented method 400 for generating ancillary bundled offers by jointly optimizing the customer bundle preferences of ancillary product bundles and revenue maximizing bundle prices for segmented existing customers using customers' historical ancillary purchase data implemented by the system 100 of FIG. 1. Functions of the components of the system 100 are now explained through steps of flow diagram in FIG. 4, according to some embodiments of the present disclosure.

Starting at step 402 of the processor-implemented method 400, the one or more hardware processors 108 are configured by the programmed instructions to receive, via an input/output interface, a historical data of (i) one or more ancillary items, or (ii) one or more ancillary bundles purchased by one or more customers as input, wherein each of the one or more ancillary bundles include one or more predefined ancillary items.

At the next step 404 of the processor-implemented method 400, the one or more hardware processors 108 are configured by the programmed instructions to analyze the received historical data to recognize one of (i) a single ancillary item, or (ii) a combination of two or more ancillary items, or (iii) one or more ancillary bundles purchased by the one or more customers.

The historical ancillary purchase data can include historical bundles purchase data, or historical items purchase data depending upon the service provider, whether they offer bundles or items only. The Items purchase to bundles purchase data conversion comes into play only when the service provider offers only items and not bundles and, in this case, the customer purchased a single item or a combination of items.

At the next step 406 of the processor-implemented method 400, the one or more hardware processors 108 are configured by the programmed instructions to convert if the historical data is recognized as single ancillary item, or the combination of two or more ancillary items purchased together into a bundle of one or more ancillary items by assigning a bundle-identification to each of the one or more ancillary bundles. The output from items to bundle conversion data technique is stored into the historical ancillary purchase database and is taken as input to customer segmentation technique.

At step 408 of the processor-implemented method 400, the one or more hardware processors 108 are configured by the programmed instructions to identify whether the customer is an existing customer or a new customer. The existing customer is the one who has ancillary items/bundles purchase history while the new customer is the one, who does not have any ancillary items/bundles purchase history.

At the next step 410 of the processor-implemented method 400, the one or more hardware processors 108 are configured by the programmed instructions to segment each of the one or more existing customers into one or more segments based on a similar preferred bundles customer segmentation technique to recommend one or more unique set of bundles of ancillary items. Customer segmentation is done granularly using a Similar Preferred Bundles Customer Segmentation (SPBCS) technique. In one example, customers bundle historical purchase data as shown in Table 1.

**Table 1**

| Customer feature vector represented as (Journey hour, Month of travel, Days to departure) | Customer | Bundles Purchased | Bundle Identification |
|---|---|---|---|
| (1, March,2) | u1 | {Excess luggage + Priority boarding} | 3 |
| (1, June,10) | u1 | {Internet Wi-fi} | 0 |
| (1, March,2) | u1 | {Excess luggage + Priority boarding} | 3 |
| (1, March,2) | u2 | {Excess luggage + Priority boarding} | 3 |
| (1, June,10) | u2 | {Internet Wi-fi} | 0 |
| (3, March,10) | u2 | {Internet Wi-fi} | 0 |
| (3, March,2) | u3 | {Excess luggage + Priority boarding+ Internet Wi-fi} | 6 |
| (1, June,10) | u3 | {Internet Wi-fi+ Excess luggage} | 4 |
| (3, Dec,2) | u4 | {Excess luggage + Priority boarding+ Internet Wi-fi} | 6 |
| (1, June,10) | u4 | {Internet Wi-fi+ Excess luggage} | 4 |
| (1, March,10) | u4 | {Internet Wi-fi+ Excess luggage} | 4 |

The detailed steps of SPBCS technique are:

Step 1: Analyzing the one or more bundles historically purchased by the one or more customers to determine the unique set of ordered bundles purchased and unique set of customer feature vectors for each customer from the input customer bundles historical purchase data. It is to be noted that the unique set of ordered bundles purchased, and the unique set of customer feature vectors are identified for each customer from the input customer bundles historical purchase data. The technique to find the Unique set of ordered bundles Purchased involves, first, creating a list of bundles based on bundle identification purchased by the customer say L1 of size N, then sorting the list L1 using any of the standard sorting techniques like quick sort, insertion sort, etc. Then the system starts traversing the list L1 from index 0 to N -1 and for any element/bundle at index i(L1[i]), the system will search for the duplicate element from index 0 to i. If the system finds a duplicate element, then the system skips the current element otherwise stores it in another list L2. The list L2 is a unique set of ordered bundles purchased. Wherein ordering means that the unique set of bundles are listed down in ascending order of their bundle identification. Table 2 shows the unique set of customer feature vectors and unique set of ordered bundles purchased for the one or more customers.

Step 2: Find one or more customers who have a similar unique set of ordered bundles purchased by forming key-value with segment as key and customers in the segment as value. wherein segment is the unique set of ordered bundles historically purchased.

Step 3: Find a unique set of customer feature vectors associated with the segments by forming the key-value pairs with the segment as key and the unique set of customer feature vectors associated with the segment as value. There already exists information on the customers present in the segment, and a customer is related to customer feature vectors. In this way, the system identifies all customer feature vectors present in the segment, then find the unique among them.

**Table 2**

| Unique set of customer feature vector | Customer | Unique set of ordered bundles Purchased |
|---|---|---|
| (1, March,2), (1, June,10) | u1 | 0,3 |
| (1, March,2), (1, June,10), (3, March, 10) | u2 | 0,3 |
| (3, March,2), (1, June,10) | u3 | 4,6 |
| (3, Dec,2), (1, June,10), (1, March, 10) | u4 | 4,6 |

Step 4: Assign a Segment-id to each of the identified list of segments and combine output from step 2 and step 3 to get output as segment-id, customers in the segment, unique set of ordered bundles purchased in the segment and unique set of customer feature vectors associated with the segments.

Step 5: Obtain segment side features for each of the segments to be used in the SCBPR-LTR technique. To find segment side features, first, the total possible customer feature vectors are defined. The value at the index of the customer feature vector present in the segment is made of 1 and the value at the index of the customer feature vector does not present in the segment is made of 0. The segment side features are used later in ancillary bundle recommendation (SCBPR-LTR) technique.

Step 6: Store the output of the SPBCS technique that consists of segment side features, segment-ids, customers in the segments and unique set of ordered bundles purchased associated with the segment into the SPBCS database as shown in fig 3. Table 3 shows the segmentation output.

**Table 3**

| Segment side features | | | | | | Segment-id | Customer | Unique set of ordered Bundle Purchased |
|---|---|---|---|---|---|---|---|---|
| (1, March,2) | (1, June, 10) | (3, March, 10) | (1, March, 10) | (3, Dec, 2) | (3, March,2) | | | |
| 1 | 1 | 1 | 0 | 0 | 0 | s1 | u1, u2 | **0,3** |
| 0 | 1 | 0 | 1 | 1 | 1 | s2 | u3, u4 | **4,6** |

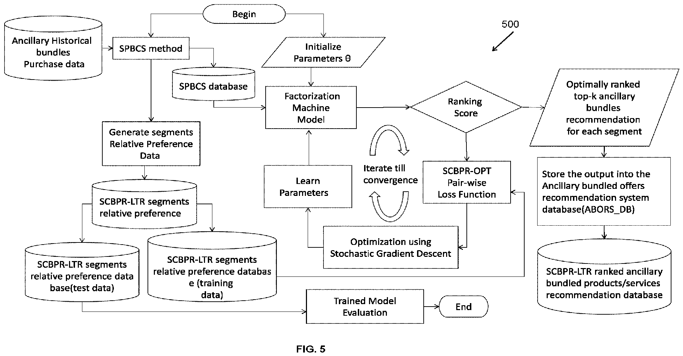

At the next step 412 of the processor-implemented method 400, the one or more hardware processors 108 are configured by the programmed instructions to rank one or more set of bundles of ancillary items for the each of the one or more segments of one or more existing customers using the SCBPR-LTR technique illustrated as a flow chart 500 in FIG. 5.

The SCBPR-LTR technique does the top-$k$ ancillary bundled products/services recommendation for segmented customers considering the bundle preferences. The SCBPR-LTR technique comprises of segment relative preference bundle data generation, Optimization criterion SCBPR-OPT, a recommendation model (Factorization machine), Optimization model (Stochastic gradient descent), trained model evaluation and storing the optimally ranked one or more bundles of ancillary items for each segment of customers into SCBPR-LTR ranked ancillary bundled products/services recommendation database as shown in fig 3.

Here the optimization criterion is described. Let S= $\{s_1, s_2, s_3, ...s_n\}$ to be the set of all segments and B= $\{b_1, b_2, b_3, ....b_n\}$ to be the set of all bundles. The $>_S$ is the total ordering of bundle preferences for all segments of customers, which given any two bundles $b_1$ and $b_2$, the segment of customers will prefer one or the other. Let $(\theta)$ be parameter vector of the recommender model that needs to be found. The Bayesian formulation of the ranking problem will be to find the models' parameters $(\theta)$ such that there is the highest probability that this model will generate an optimal ordering for all segments of customers. So, the posterior probability will be written as p($\theta$| $>_s$).

According to Bayes' theorem, to maximize this probability, maximize the following because they are proportional.

$$p(\theta)\,p(>_S |\theta), \qquad (1)$$

where the first term is Prior, and the second term is the likelihood. So, this maximization will be written as:

$$\arg\max_{\theta} p(\theta)\,p(>_S |\theta), \qquad (2)$$

which indicates that the system needs to maximize the parameters of the model, $(\theta)$

It is assumed that the parameters of the model are normally distributed and independent with zero mean and variance/covariance matrix as $\Sigma_\theta$, so prior becomes:

$$p(\theta) = \sqrt{\frac{1}{2\pi}}\ e^{\frac{1}{2}\lambda||\theta||^2} \qquad (3)$$

where $\lambda$ is equal to regularization parameter and $\theta$ is parametric vector of the model.

In another aspect, likelihood $p(>_s |\theta)$ for all segments of customers is maximized -

$$p(>_{s1}|\theta) * p(>_{s2}|\theta) * p(>_{s3}|\theta) \ldots * p(>_{sn}|\theta) \qquad (4)$$

wherein, the equation (4) can be written as:

$$\prod_{s\in S} p(>_s|\theta) \qquad (5)$$

since pairwise ranking and probability of ordering for each datapoint $(s, b_i, b_j)$ in the training dataset $D_s$ are considered, then this becomes:

$$\prod_{s\in S} p(>_s|\theta) = \prod_{(s,b_i,b_j)\in D_s} p(b_i >_s b_j|\theta) \qquad (6)$$

where $D_s$ is defined below, is the training set, with $B_s^+$ denoting the bundle, the segment of customers liked, $B$ denoting all the bundles and $B\backslash B_s^+$ indicating all other bundles excluding the bundles the segment of customers liked.

$$D_s := \{(s, b_i, b_j)|b_i \epsilon B_s^+ \wedge b_j \epsilon B\backslash B_s^+\} \qquad (7)$$

$D_s$ represent training data in the form of tuple $(s, b_i, b_j)$, which represents that the segment of customers $s$, prefers bundle $b_i$ over bundle $b_j$. Now considering sigmoid function $(\sigma)$ which is integrable and also $\hat{y}_{s,b_i}$, $\hat{y}_{s,b_j}$, which denote the predicted ranking scores that the segment of customers s would purchase bundle $b_i$ and $b_j$ respectively, which can be predicted due to recommender system model $\theta$, and this can be written as

$$p(b_i >_s b_j|\theta) = p\left(\hat{y}_{s,b_i} - \hat{y}_{s,b_j} > 0\right) = \sigma\left(\hat{y}_{s,b_i} - \hat{y}_{s,b_j}\right) = \frac{1}{1+e^{-\left(\hat{y}_{s,b_i}-\hat{y}_{s,b_j}\right)}} \qquad (8)$$

So, likelihood becomes:

$$\prod_{s\in S} p(>_s|\theta) = \prod_{(s,b_i,b_j)\in D_s} \sigma\left(\hat{y}_{s,b_i} - \hat{y}_{s,b_j}\right) \qquad (9)$$

Now coming to the maximum posterior estimator arg max $p(\theta|>_s)$, since the function $\underset{\theta}{\arg\max}\, p(>_s|\theta)p(\theta)$ is continuous and always increasing, this can be re-written as

$$\underset{\theta}{\arg\max} \ln p(>_s|\theta)p(\theta) \qquad (10)$$

Further, a maximum posterior probability is formulated to derive the generic Optimization criterion for the segmented personalized ranking task that is:

$$\text{SCBPR-Opt} := p(\theta|>_s) \qquad (11)$$

which is proportional to $p(>_s|\theta)p(\theta)$. Now inserting the above equations of likelihood (equation 9) and prior (equation 3) into this becomes

$$\ln\left[\prod_{(s,b_i,b_j)\in D_s}\left(\sigma\left(\hat{y}_{s,b_i} - \hat{y}_{s,b_j}\right)\right)\sqrt{\frac{1}{2\pi}}\, e^{\frac{1}{2}\lambda||\theta||^2}\right] \qquad (12)$$

Setting $\lambda = 1/2\lambda$ for simplification and expanding the log, this equation becomes

$$\sum_{(s,b_i,b_j)\in D_s} \ln\left(\sigma\left(\hat{y}_{s,b_i} - \hat{y}_{s,b_j}\right)\right) - \lambda||\theta||^2 \qquad (13)$$

The maximum posterior estimator is formulated to derive the optimization criterion for our SCBPR-LTR and can be written as

$$\text{SCBPR-Opt} = \arg\max_\theta \sum_{(s,b_i,b_j)\in D_s} \ln\left(\sigma\left(\hat{y}_{s,b_i} - \hat{y}_{s,b_j}\right)\right) - \lambda\|\theta\|^2 \quad (14)$$

Updation of model parameter is done using the gradient of SCBPR and is shown below:

$$\theta \leftarrow \theta + \eta\, \frac{\partial\, SCBPR-OPT}{\partial\theta} \quad (15)$$

which becomes

$$\theta \leftarrow \theta + \eta\left(\frac{e^{-\hat{y}_{s,b_i,b_j}}}{1+e^{\hat{y}_{s,b_i,b_j}}}\, \frac{\partial\, \hat{y}_{s,b_i,b_j}}{\partial\theta} + \lambda\theta\right) \quad (16)$$

where,

$$\hat{y}_{s,b_i,b_j} = \hat{y}_{s,b_i} - \hat{y}_{s,b_j}$$

and

$$\frac{\partial \hat{y}_{s,b_i,b_j}}{\partial\theta} = \Big\{$$

| | |
|---|---|
| $1$ | If $\theta = \beta_{b_i}$ |
| $-1$ | If $\theta = \beta_{b_j}$ |
| $Q_{b_i l} - Q_{b_j l}$ | If $\theta = P_{s,l}$ |
| $P_{s,l} + \sum\limits_{z=1}^{Z} f_{s,z}\, F_{z,l}$ | If $\theta = Q_{b_i,l}$ |
| $-P_{s,l} - \sum\limits_{z=1}^{Z} f_{s,z}\, F_{z,l}$ | If $\theta = Q_{b_j,l}$ |
| $f_{s,z}\,(Q_{b_i,l} - Q_{b_j,l})$ | If $\theta = F_{z,l}$ |

Here $\eta$ represents the learning rate. As the algorithm sweeps through the training set, it performs the gradient update until convergence. After convergence the segment's predicted ranking score for a bundle is calculated using $\hat{y}_{s,b}$. For a given segment the bundles are ranked based on the calculated ranking score and *top-k* bundles are recommended for a customer based on their segment.

Here the segments relative preference data generation that will be used for training the SCBPR-LTR technique is described. The segment relative preference bundle data is split into training data and test data. The training and test data is constructed by tuples in the form of $(s, b_i, b_j)$, where the first bundle $b_i$ referred as the positive bundle, is chosen from the segment positive feedback and the second bundle, referred as the negative bundle, $b_j$ is sampled from the unobserved interactions.

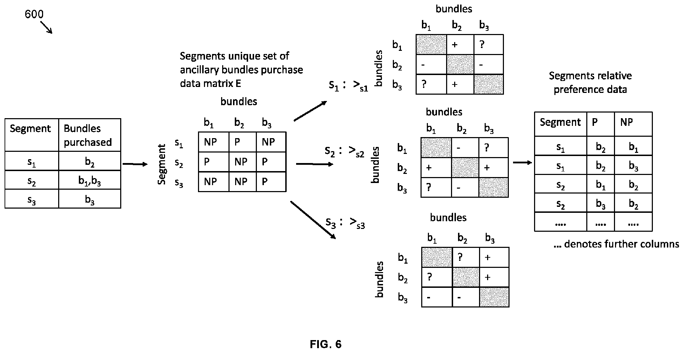

FIG. 6 shows the example relative preference data generation for three segments, according to some embodiments of the present disclosure. Matrix $E \subseteq S \times B$ represents segments unique set of ancillary bundles purchase data. To understand better let's consider the relative preference data generation for one segment i.e., $s_1$. The customers in this segment have only purchased a unique bundle $b_2$. The segment $s_1$ bundles purchased data is now represented in a format where 'P' represents the bundle purchased by the segment $s_1$ and the non-purchased bundles are represented by 'NP'. Further, a segment specific pairwise preferences $>_{s1}$ between a pair of bundles is created. On the right side, plus (+) indicates that bundles represented in rows heading are preferred over bundles represented in column heading by the segment; minus (-) indicates that segment prefers bundles represented in column heading over row heading. In the FIG. 6

segment $s_1$ has purchased bundle $b_2$ but not bundle $b_1$, so this segment of customers prefers bundle $b_2$ over $b_1$: $b_2 >_{s1} b_1$ is inferred. For bundles that have both been purchased by a segmented customer, any preference is inferred and are represented by (?). Similarly for two bundles that a segment has not purchased yet (e.g., bundle $b_1$ and $b_3$ for segmented customer $s_1$) any preference is not inferred and are represented by (?). The missing values(?) between two non-purchased bundles are exactly the bundle pairs that have to be ranked in the future. Similarly, relative preference data is generated for other segments. Therefore, from $E$ the system reconstructs the total ordering >s. If a bundle b has been purchased by segment s i.e. (s; b) 6 E, then the system infer that the segment prefers this bundle over all other non-purchased bundles. Segments relative preference training data and test data are stored in respective databases, as shown in fig 3.

Here the recommendation model is described. The SCBPR-LTR uses a modified version of general-purpose Factorization machine (FM) model as a recommendation model. The Factorization machine (FM) model is modified to suit segments and bundles and is given below:

$$\hat{y}_{s,b} = \beta_b + \sum_{l=1}^{T} P_{s,l} Q_{b,l} + \sum_{z=1}^{Z} f_{s,z} \sum_{l=1}^{T} F_{z,l} Q_{b,l} \qquad (17)$$

wherein Segment's latent factors matrix ($P$:|S|xT), bundle's latent factors matrix ($Q$: |B|xT), Segment side feature latent factors matrix ($F$:ZxT) and bundle bias terms ($\beta_b$) are model parameters of the FM. Here |S| is the total number of segments, |B| is total number of bundles, Z is total number of segment side features and T is one of the hyper-parameters, which represents the number of latent factors to represent segments, bundles and segment side features. Each row $P_s$ in $P$ is latent factors describing a segment $s$, each row $Q_b$ in $Q$ is latent factors describes a bundle b and each row $F_z$ in $F$ is latent factors describes the segment side feature z. The $f_{s,z}$ is the value of side feature $z$ for segment $s$.

In SCBPR-LTR technique, optimization is done based on Stochastic Gradient Descent with graph sampling to optimize the factorization machine model with respect to the optimization criterion (SCBPR-Opt) to arrive at the Optimal personalized ranking for all segments of customers. The segments side features are used as input to factorization machine which are taken from SPBCS database. Optimization starts with initialization of ($\theta$) parameters, bias and calculation of loss sample, then trains the model, calculates the pairwise ranking loss, ranking score, gradient, updates model parameters and this is continued iteratively till convergence. The segments optimal personalized ranking results are evaluated using NDGC and AUC metrics.

At the next step 414 of the processor-implemented method 400, the one or more hardware processors 108 are configured by the programmed instructions to price the ranked one or more *top-k* set of bundles of ancillary items for the identified customer segments using SCOBP technique. The optimal price of one or more ranked bundles of ancillary items for each segmented customer is stored in SCOBP database as shown in fig 3.

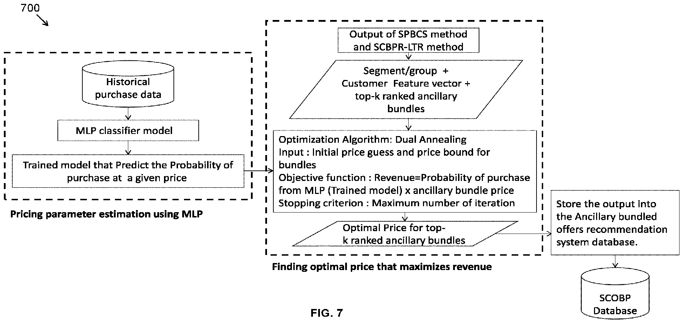

FIG. 7 is a flow chart to illustrate Segmented customer optimal bundle pricing (SCOBP) technique, according to some embodiments of the present disclosure. The SCOBP technique that determines the optimal price of the recommended ancillary bundles for each segment maximizes revenue. The SCOBP technique learns the bundle purchase probability, ancillary bundle revenue, and revenue maximizing-optimal bundle prices using historical data. The technique would work if historical ancillary purchased data is either bundles data or items data. When using bundles data, the input data consists of customer feature vector, historical offered price, ancillary bundles shown, selected ancillary bundle and relevant segment from SPBCS technique and finds the optimal price of multiple ancillary bundles recommended considering the relative comparison between bundles presented. When using items data, the input data consists of customer feature vector, historical offered price, item/items combination interacted, decision on whether that item/items combination is selected and relevant segment from SPBCS technique and finds the optimal price of ancillary bundles recommended using item/items combination purchase data. The SCOBP technique involves two sub-techniques: pricing parameter Estimation (Using MLP model) and finding the optimal price that maximizes revenue using optimization technique (Dual Annealing).

Pricing parameter estimation (Using MLP model) involves learning the pricing parameters of the Neural network based Multilayer perceptron classifier (MLP classifier) model using the historical ancillary bundles or items purchase data. When using ancillary bundles purchase data; the segment is represented by segment configuration. The segment configuration is defined as a list with zero everywhere and 1 at the index of bundle purchased in the segment. For example, if there are 5 bundles and say segment s is (3,5) i.e., the customers in this segment have historically purchased bundles 3 and 5. The segment configuration is defined as [0,0,1,0,1] when training the model. The bundles are represented by bundle configuration. When using ancillary items purchase data; To define an item/items combination, combination of 1 and zeros is used. Say there are 5 items, and a customer has purchased item 1 and item 2 together then it is defined as [1,1,0,0,0] and the price is defined as the sum of the price for two items. The equation for MLP classifier when using ancillary bundles purchase data is:

$$\hat{Y}_{1,i}, \dots \hat{Y}_{C,i} = f_{MLP}(X_i, W_{MLP}) \qquad (18)$$

where $f_{MLP}$ is the standard *MLP* classifier and $\hat{Y}_{1,i}, ... \hat{Y}_{C,i}$ are predicted scores for classes 1, ..., *C*. There are '*C*' classes /decisions including not purchasing any bundle. $X_i$ is i-th input sample, W- weights of the MLP.

$$L_{CE} = -\frac{1}{N} \sum_{i=1}^{N} \sum_{c=1}^{C} Y_{i,c} \log \hat{Y}_{i,c} \qquad (19)$$

wherein the cross-entropy loss function ($L_{CE}$) is given by the above equation. Where $c \in \{1,...,C\}$ is a class, i denotes the i-th input sample and N is total number of samples in the train set. MLP Classifier trains iteratively since at each time step the partial derivatives of the loss function with respect to the model parameters are computed to update the parameters.

In another embodiment, the optimal price that maximizes revenue is found using a Dual Annealing as an optimization technique. It involves predicting the optimal price of ancillary bundle combination recommended (when using bundles data)/ Individual ancillary bundle recommended (when using items data) over the range of price using the pricing parameters estimated in the above pricing parameters estimation sub-model. Following is the equation for revenue i-th sample/i-th bundle combination when using ancillary bundles purchase data.

$$Revenue \ (r_i) = pr_{1,i}.\hat{Y}_{1,i} + pr_{2,i}.\hat{Y}_{2,i} \ .... \ + pr_{C-1,i}.\hat{Y}_{C-1,i} \qquad (20)$$

wherein, (C-1) bundles are offered to the customer and pr is the price for those bundles. So, there will be 'C' classes/decisions including not purchasing any bundle. The revenue-optimal price is obtained for the bundles offered by maximizing this revenue equation using Dual Annealing, a global optimization algorithm.

At the step 416 of the processor-implemented method 400, the one or more hardware processors 108 are configured by the programmed instructions to construct *top-k* ancillary bundle offers by jointly optimizing the outputs of SCBPR-LTR technique and SCOBP technique considering customer ancillary bundle preferences and revenue maximizing optimal bundle prices for each of the one or more segments of one or more existing customers.

Finally, at the last step 418 of the processor-implemented method 400, the one or more hardware processors 108 are configured by the programmed instructions to recommend the jointly optimized one or more set of bundles of ancillary items to the segmented each of the one or more existing customers.

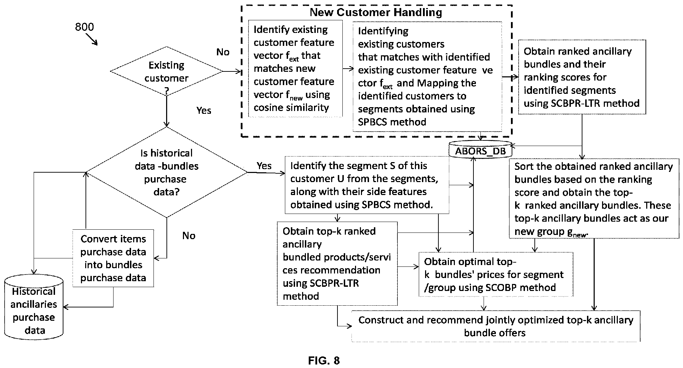

FIG. 8 is a functional block diagram 800 to show details for the existing and new customer recommendation of ancillary bundles, according to some embodiments of the present disclosure. For existing customers, when a customer say *U* arrives, the segment say S of the customer is identified using SPBCS technique. Segment *S* is passed as an input to the SCBPR-LTR technique. The output of SCBPR-LTR is the optimally ranked *top-k* ranked ancillary bundles recommendation for segment *S* (without price). The segment S, customer feature vector, and *top-k* ranked ancillary bundles recommended are now passed as input to the SCOBP technique to get the optimal offer price. It is to be noted that for ancillary bundles purchase data, the optimal price is calculated for the *top-k* ranked ancillary bundles recommended combination. For ancillary items purchased data, the optimal price is calculated for each of the *top-k* ancillary bundles recommended separately. This segments *S* ancillary bundled offers constructed after joint optimization of bundling and pricing is made to the customer *U*. The output is *top-k* jointly optimized recommended ancillary bundle offers for segmented existing customers and is stored into the ancillary bundle offers recommendation system database (ABORS-DB) as shown in FIG. 3.

In another aspect, recommendation is created for the new customer, who does not have any ancillary items/bundles purchase history, by mapping new customer feature vector to the segments obtained using the SPBCS technique and new customer handling technique. This new customer handing part comes into play only for new customers and not for existing customers. The new customer handling considers new customer feature vector and does the respective segments mapping. This involves performing new customer feature vector to existing customer feature vector mapping and then this existing feature vector to segments mapping. The new customer is identified with the feature vector, say $f_{new}$ and is mapped to the existing customer feature vectors say $f_{ext}$ among all feature vectors. This feature vector-to-feature vector mapping is done based on the similarity score of the two feature vectors using cosine similarity. Customer feature vector $f_{ext}$ to segment mapping involves listing down different segments present under a customer feature vector. This involves identifying all existing customers that matches with identified existing customer feature vector $f_{ext}$ and then Mapping all identified customers to one or more segments obtained using SPBCS technique. The output of new customer handling is one or more segments associated with the new customer's feature vector.

For new customers recommendation, first a new customer is identified by the feature vector $f_{new}$. This feature vector is mapped to segments using the above new customer handling technique. These segments are now passed as an input to the SCBPR-LTR technique. The output of SCBPR-LTR technique is the optimally ranked ancillary bundles recommended with ranking score for these segments (without price). The recommended bundles for these segments are now sorted based on ranking score to arrive at *top-k* bundles. These *top-k* ranked ancillary bundles act as our new group $g_{new}$. Now this group $g_{new}$, customer feature vector, and recommended ancillary bundles are passed as input to the SCOBP technique to arrive at the optimal offer price for the *top-k* ranked ancillary bundles. The *top-k* ranked ancillary bundles recommendations together with the offer price constructed after joint optimization of bundling and pricing is made to the new customer. The output is *top-k* jointly optimized recommended ancillary bundle offers for new customers and is stored into the Ancillary bundle offers recommendation system database (ABORS-DB).

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of how to make optimized decisions jointly on ancillary bundles recommendation and optimal ancillary bundle pricing using data in order to increase the traffic and maximize revenues. Embodiments herein provide a method and system for generating ancillary bundled offers by jointly optimizing the customer bundle preferences of ancillary product bundles and revenue maximizing bundle prices for segmented customers using customers' historical ancillary purchase data.

It is to be understood that the scope of the protection is extended to such a program and in addition to a computer-readable means having a message therein; such computer-readable storage means contain program-code means for implementation of one or more steps of the method, when the program runs on a server or group of servers or any suitable programmable device. The hardware device can be any kind of device which can be programmed including e.g., any kind of computer like a server or a custom build server, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

**1.** A processor-implemented method (400) comprising:

receiving (402), via an Input/Output (I/O) interface, a historical data of (i) one or more ancillary items, or (ii) one or more bundles purchased by one or more customers as input, wherein each of the one or more bundles include one or more predefined ancillary items;

analyzing (404), via the one or more hardware processors, the received historical data to recognize one of (i) a single ancillary item, or (ii) a combination of two or more ancillary items, or (iii) one or more ancillary bundles purchased by the one or more customers;

converting (406), via the one or more hardware processors, the historical data into a bundle of one or more ancillary items by assigning a bundle-identification to each of the one or more ancillary bundles if the historical data is recognized as (i) single ancillary item, or (ii) the combination of two or more ancillary items purchased together;

identifying (408), via the one or more hardware processor, one or more existing customers, and one or more new customers of the one or more customers based on the received historical data, wherein each of the one or more existing customers are identified based on a customer identification who has one or more ancillary items, or one or more ancillary bundles purchase history, and wherein the one or more new customers do not have purchase history of one or more ancillary items or one or more ancillary bundles;

segmenting (410), via the one or more hardware processors, each of the one or more existing customers into one or more segments based on a Similar Preferred Bundles Customer Segmentation (SPBCS) technique;

ranking (412), via the one or more hardware processors, each of the one or more bundles of the one or more ancillary items for each of the one or more segments of one or more existing customers using a Segmented Customer Bayesian Personalized Ranking Learning to Rank technique (SCBPR-LTR) technique and obtain *top-k* ranked ancillary bundles for each segment of one or more existing customers, wherein *top-k* ranked ancillary bundles are first *k* bundles from the list of ranked one or more bundles of ancillary items;

pricing (414), via the one or more hardware processors, the *top-k* ranked bundles of ancillary items for each of the one or more segments of one or more existing customers using a Segmented Customer Optimal Bundle Pricing (SCOBP) technique;

constructing (416) *top-k* ancillary bundle offers by jointly optimizing, via the one or more hardware processors, the outputs of the SCBPR-LTR technique and the SCOBP technique considering customer ancillary bundle preferences and revenue maximizing optimal bundle prices for each of the one or more segments of one or more existing customers; and

recommending (418), via the one or more hardware processors, the jointly optimized *top-k* bundles of ancillary items to each of the one or more segments of one or more existing customers.

2. The processor-implemented method (400) as claimed in claim 1, further comprising:

determining, via the one or more hardware processors, a customer feature vector for each of the one or more identified new customers, wherein the customer feature vector is a set of one or more attributes;

mapping, via the one or more hardware processors, the identified one or more new customers to one or more segments using a new customer handling technique and the SPBCS technique;

ranking, via the one or more hardware processors, one or more bundles of ancillary items for the identified one or more new customers by:

identifying the one or more bundles of ancillary items and their ranking scores for one or more mapped segments associated with the identified one or more new customers using the SCBPR-LTR technique, and sorting the identified one or more bundles of ancillary items based on the ranking scores and obtain *top-k* ranked one or more bundles of ancillary items for identified one or more new customers, wherein the *top-k* ranked one or more bundles is identified as the group for the new customer;

pricing, via the one or more hardware processors, the *top-k* ranked bundles of ancillary items for one or more group identified for one or more new customer using the SCOBP technique, wherein the SCOBP technique comprising:

training a Multi-layer Perceptron (MI,P) classifier model based on the received historical purchased data and relevant segments from the SPBCS technique to estimate pricing parameters of the (i) one or more ancillary items, or (ii) one or more bundles purchased by one or more segmented customers;

determining an optimal price that maximizes revenue of one or more ranked ancillary bundles recommended for one or more segments of customer over the range of price using estimated pricing parameters and a standard optimization technique, wherein optimal price is determined for one or more ancillary bundle combination recommended considering the relative comparison between bundles when using one or more bundles purchase data and optimal price is determined for one or more ancillary bundle recommended when using one or more ancillary items purchase data; and

storing the optimal price of one or more ranked bundles of ancillary items for each segmented customer in the ancillary bundled offers recommendation system database;

constructing *top-k* ancillary bundle offers by jointly optimizing, via the one or more hardware processors, the outputs of the SCBPR-LTR technique and the SCOBP technique considering customer ancillary bundle preferences and revenue maximizing optimal bundle prices for each of the one or more groups of the identified one or more new customers; and

recommending, via the one or more hardware processors, the jointly optimized *top-k* bundles of ancillary items to each of one or more groups of the one or more identified new customers.

3. The processor-implemented method (400) as claimed in claim 1, wherein the SPBCS technique involves a segmentation of the one or more customers into one or more segments comprises:

analyzing, via the one or more hardware processors, the one or more bundles historically purchased by the one or more customers to determine a unique set of ordered bundles purchased and a unique set of customer feature vectors for each of the one or more customers;

finding, via the one or more hardware processors, one or more customers having a similar unique set of ordered bundles purchased by forming key-value pairs with segment as key and customers in the segment as value, wherein the segment is the unique set of ordered bundles historically purchased;

finding, via the one or more hardware processors, a unique set of customer feature vectors associated with the segments by forming the key-value pairs with the segment as key and the unique set of customer feature vectors associated with the segment as value;

assigning, via the one or more hardware processors, a segment-identification to each of the identified list of segments and associate this segment identification with the customers in the segment, unique set of ordered bundles purchased in the segment and unique set of customer feature vectors associated with the segments;

obtaining, via the one or more hardware processors, one or more segment side features for each of the one or more segments to be used in the SCBPR-LTR technique; and

storing, via the one or more hardware processors, the output of the SPBCS technique comprises of segment side features, segment-identification, customers in the segments and unique set of ordered bundles purchased associated with the segment into the ancillary bundled offers recommendation system database.

4. The processor-implemented method (400) as claimed in claim 2, wherein the new customer handling technique comprises identifying an existing customer feature vector that matches with the new customer feature vector using a cosine similarity and then the existing customer feature vector to segments mapping, and wherein the existing customer feature vector to segment mapping involves identifying one or more existing customers that matches with identified existing customer feature vector and then mapping identified existing customers to one or more segments obtained using the SPBCS technique.

5. The processor-implemented method (400) as claimed in claim 1, wherein the SCBPR-LTR technique provides an ancillary bundle ranking for each segment without price.

6. The processor-implemented method (400) as claimed in claim 1, wherein the SCBPR-LTR technique comprises of a segment relative preference bundle data generation, an optimization criterion SCBPR-OPT, a recommendation model (Factorization machine), optimization model (Stochastic gradient descent), a trained model evaluation and storing the optimally ranked one or more bundles of ancillary items for each segment of customers into ancillary bundled offers recommendation system database, wherein the trained model evaluation involves evaluating the recommendation model that is trained using ranking evaluation metrics using segment relative preference test data.

7. The processor-implemented method (400) as claimed in claim 6, wherein the segment relative preference bundle data generation includes generation of a segment of customers and a pair of bundles where the first bundle, referred to as the positive bundle, is chosen from the segment's positive feedback (purchased bundle), and the second bundle, referred to as the negative bundle, is sampled from an unobserved interaction (non-purchased bundle), wherein this data is divided into segment relative preference bundle training data and test data and stored into ancillary bundled offers recommendation system database.

8. The processor-implemented method (400) as claimed in claim 6, wherein the optimization criterion SCBPR-Opt is derived by maximizing the posterior probability of Bayesian analysis of the pairwise ranking and training the SCBPR-LTR involves optimization done based on optimization model that is stochastic gradient descent with graph sampling to optimize the factorization machine model that provides ranking score used in ranking one or more bundles of ancillary items with respect to the SCBPR-optimization criterion (SCBPR-Opt) to arrive at the optimal personalized ranking for all segments of customers.

9. The processor-implemented method (400) as claimed in claim 1, wherein the SCOBP technique learns a bundle purchase probability, an ancillary bundle revenue and a revenue maximizing-optimal bundle prices for segmented customers using historical purchased data of (i) one or more ancillary items, or (ii) one or more bundles purchased by one or more customers and relevant segments from SPBCS technique as input.

10. A system (100) comprising:

a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:

receive a historical purchased data of (i) one or more ancillary items, or (ii) one or more bundles purchased by one or more customers as input, wherein each of the one or more bundles include one or more predefined ancillary items;
analyze the received historical data to recognize one of (i) a single ancillary item, or (ii) a combination of two or more ancillary items, or (iii) one or more ancillary bundles purchased by the one or more customers;
convert the historical data into a bundle of one or more ancillary items by assigning a bundle-identification to each of the one or more ancillary bundles if the historical purchased data is recognized as (i) the single ancillary item, or (ii) the combination of two or more ancillary items purchased together;
identify one or more existing customers, and one or more new customers of the one or more customers based on the received historical data, wherein each of the one or more existing customers are identified based on a customer identification who has one or more ancillary items, or one or more ancillary bundles purchase history, and wherein the one or more new customers do not have purchase history of one or more ancillary items or one or more ancillary bundles;
segment each of the one or more existing customers into one or more segments based on a Similar Preferred Bundles Customer Segmentation (SPBCS) technique;
rank each of the one or more bundles of the one or more ancillary items for each of the one or more segments of one or more existing customers using a Segmented Customer Bayesian Personalized Ranking Learning to Rank technique (SCBPR-LTR) technique and obtain *top-k* ranked ancillary bundles for each segment of one or more existing customers, wherein *top-k* ranked ancillary bundles are first k bundles from the list of ranked one or more bundles of ancillary items;
price the *top-k* ranked bundles of ancillary items for each of the one or more segments of one or more existing customers using a Segmented Customer Optimal Bundle Pricing (SCOBP) technique;
construct *top-k* ancillary bundle offers by jointly optimizing the outputs of the SCBPR-LTR technique and the SCOBP technique considering customer ancillary bundle preferences and revenue maximizing optimal bundle prices for each of the one or more segments of one or more existing customers; and
recommend the jointly optimized *top-k* bundles of ancillary items to each of the one or more segments of one or more existing customers.

11. The system (100) as claimed in claim 10, further comprising:

determine a customer feature vector for each of the one or more identified new customers, wherein the customer feature vector is a set of one or more attributes;
map the identified one or more new customers to one or more segments using a new customer handling technique and the SPBCS technique,
rank one or more bundles of ancillary items for the identified one or more new customers by:

identifying the one or more bundles of ancillary items and their ranking scores for one or more mapped segments associated with the identified one or more new customers using the SCBPR-LTR technique, and sorting the identified one or more bundles of ancillary items based on the ranking scores and obtain *top-k* ranked one or more bundles of ancillary items for identified one or more new customers, wherein the *top-k* ranked one or more bundles is identified as the group for the new customer;

price the *top-k* ranked bundles of ancillary items for one or more group identified for one or more new customer using the SCOBP technique, wherein the SCOBP technique comprising:

training a Multi-layer Perceptron (MI,P) classifier model based on the received historical purchased data and relevant segments from the SPBCS technique to estimate pricing parameters of the (i) one or more ancillary items, or (ii) one or more bundles purchased by one or more segmented customers;

determining an optimal price that maximizes revenue of one or more ranked ancillary bundles recommended for one or more segments of customer over the range of price using estimated pricing parameters and a standard optimization technique, wherein optimal price is determined for one or more ancillary bundle combination recommended considering the relative comparison between bundles when using one or more bundles purchase data and optimal price is determined for one or more ancillary bundle recommended when using one or more ancillary items purchase data; and

storing the optimal price of one or more ranked bundles of ancillary items for each segmented customer in the ancillary bundled offers recommendation system database;

construct *top-k* ancillary bundle offers by jointly optimizing the outputs of the SCBPR-LTR technique and the SCOBP technique considering customer ancillary bundle preferences and revenue maximizing optimal bundle prices for each of the one or more groups of the identified one or more new customers; and

recommend the jointly optimized *top-k* bundles of ancillary items to each of one or more groups of the one or more identified new customers.

12. The system (100) as claimed in claim 10, wherein the SPBCS technique involves a segmentation of the one or more customers into one or more segments comprises:

analyze the one or more bundles historically purchased by the one or more customers to determine a unique set of ordered bundles purchased and a unique set of customer feature vectors for each of the one or more customers;

find one or more customers having a similar unique set of ordered bundles purchased by forming key-value pairs with segment as key and customers in the segment as value, wherein the segment is the unique set of ordered bundles historically purchased;

find a unique set of customer feature vectors associated with the segments by forming the key-value pairs with the segment as key and the unique set of customer feature vectors associated with the segment as value;

assign a segment-identification to each of the identified list of segments and associate this segment identification with the customers in the segment, unique set of ordered bundles purchased in the segment and unique set of customer feature vectors associated with the segments;

obtain one or more segment side features for each of the one or more segments to be used in the SCBPR-LTR technique; and

store the output of the SPBCS technique comprises of segment side features, segment-identification, customers in the segments and unique set of ordered bundles purchased associated with the segment into the ancillary bundled offers recommendation system database.

13. One or more non-transitory machine-readable information storage mediums comprising one or more instructions which when executed by one or more hardware processors cause:

receiving, via an Input/Output (I/O) interface, a historical data of (i) one or more ancillary items, or (ii) one or more bundles purchased by one or more customers as input, wherein each of the one or more bundles include one or more predefined ancillary items;

analyzing the received historical data to recognize one of (i) a single ancillary item, or (ii) a combination of two or more ancillary items, or (iii) one or more ancillary bundles purchased by the one or more customers;

converting the historical data into a bundle of one or more ancillary items by assigning a bundle-identification to each of the one or more ancillary bundles if the historical data is recognized as (i) single ancillary item, or (ii) the combination of two or more ancillary items purchased together;

identifying one or more existing customers, and one or more new customers of the one or more customers based on the received historical data, wherein each of the one or more existing customers are identified based on a customer identification who has one or more ancillary items, or one or more ancillary bundles purchase history, and wherein the one or more new customers do not have purchase history of one or more ancillary items or one or more ancillary bundles;

segmenting each of the one or more existing customers into one or more segments based on a Similar Preferred Bundles Customer Segmentation (SPBCS) technique;

ranking each of the one or more bundles of the one or more ancillary items for each of the one or more segments of one or more existing customers using a Segmented Customer Bayesian Personalized Ranking Learning to Rank technique (SCBPR-LTR) technique and obtain *top-k* ranked ancillary bundles for each segment of one or more existing customers, wherein *top-k* ranked ancillary bundles are first k bundles from the list of ranked one or more bundles of ancillary items;

pricing the *top-k* ranked bundles of ancillary items for each of the one or more segments of one or more existing customers using a Segmented Customer Optimal Bundle Pricing (SCOBP) technique;

constructing *top-k* ancillary bundle offers by jointly optimizing the outputs of the SCBPR-LTR technique and the SCOBP technique considering customer ancillary bundle preferences and revenue maximizing optimal bundle prices for each of the one or more segments of one or more existing customers; and

recommending the jointly optimized *top-k* bundles of ancillary items to each of the one or more segments of one or more existing customers.

14. The one or more non-transitory machine-readable information storage mediums of claim 13, further comprising:

determining a customer feature vector for each of the one or more identified new customers, wherein the customer feature vector is a set of one or more attributes;

mapping the identified one or more new customers to one or more segments using a new customer handling technique and the SPBCS technique;

ranking one or more bundles of ancillary items for the identified one or more new customers by:

identifying the one or more bundles of ancillary items and their ranking scores for one or more mapped segments associated with the identified one or more new customers using the SCBPR-LTR technique, and sorting the identified one or more bundles of ancillary items based on the ranking scores and obtain *top-k* ranked one or more bundles of ancillary items for identified one or more new customers, wherein the *top-k* ranked one or more bundles is identified as the group for the new customer;

pricing the *top-k* ranked bundles of ancillary items for one or more group identified for one or more new customer using the SCOBP technique, wherein the SCOBP technique comprising:

training a Multi-layer Perceptron (MI,P) classifier model based on the received historical purchased data and relevant segments from the SPBCS technique to estimate pricing parameters of the (i) one or more ancillary items, or (ii) one or more bundles purchased by one or more segmented customers;

determining an optimal price that maximizes revenue of one or more ranked ancillary bundles recommended for one or more segments of customer over the range of price using estimated pricing parameters and a standard optimization technique, wherein optimal price is determined for one or more ancillary bundle combination recommended considering the relative comparison between bundles when using one or more bundles purchase data and optimal price is determined for one or more ancillary bundle recommended when using one or more ancillary items purchase data; and

storing the optimal price of one or more ranked bundles of ancillary items for each segmented customer in the ancillary bundled offers recommendation system database;

constructing *top-k* ancillary bundle offers by jointly optimizing the outputs of the SCBPR-LTR technique and the SCOBP technique considering customer ancillary bundle preferences and revenue maximizing optimal bundle prices for each of the one or more groups of the identified one or more new customers; and

recommending the jointly optimized *top-k* bundles of ancillary items to each of one or more groups of the one or more identified new customers.

15. The one or more non-transitory machine-readable information storage mediums of claim 13, wherein the SPBCS technique involves a segmentation of the one or more customers into one or more segments comprises:

analyzing the one or more bundles historically purchased by the one or more customers to determine a unique set of ordered bundles purchased and a unique set of customer feature vectors for each of the one or more customers;

finding one or more customers having a similar unique set of ordered bundles purchased by forming key-value pairs with segment as key and customers in the segment as value, wherein the segment is the unique set of ordered bundles historically purchased;

finding a unique set of customer feature vectors associated with the segments by forming the key-value pairs with the segment as key and the unique set of customer feature vectors associated with the segment as value;

assigning a segment-identification to each of the identified list of segments and associate this segment identification with the customers in the segment, unique set of ordered bundles purchased in the segment and unique set of customer feature vectors associated with the segments;

obtaining one or more segment side features for each of the one or more segments to be used in the SCBPR-LTR technique; and

storing the output of the SPBCS technique comprises of segment side features, segment-identification, customers in the segments and unique set of ordered bundles purchased associated with the segment into the ancillary bundled offers recommendation system database.

**FIG. 1**

200

Begin

Existing customer ? — No → New customer handling module 124 → Ancillary bundled products/services recommendation module 120

Yes

Is historical data -- bundles purchase data ? — Yes → Segmentation module 118

No → Data handling module 116

Historical ancillaries purchase data

ABORS_DB

Pricing module 122

End → Ancillary bundles offer presentation module 126

FIG. 2

300

Ancillary bundled offers
recommendation system
database(**ABORS_DB**)

| SPBCS database | SCBPR-LTR ranked ancillary bundled products/services recommendation database | SCOBP database | SCBPR-LTR segments relative preference database(training data) | SCBPR-LTR segments relative preference database(test data) |

FIG. 3

400

Receiving, via an Input/Output (I/O) interface, a historical purchased data of (i) one or more ancillary items, or (ii) one or more bundles purchased by one or more customers as input, wherein each of the one or more bundles include one or more predefined ancillary items (402)

Analyzing the received historical data to recognize one of (i) a single ancillary item, or (ii) a combination of two or more ancillary items, or (iii) one or more ancillary bundles purchased by the one or more customers(404)

Converting, if the historical purchased data is recognized as single ancillary item, or the combination of two or more ancillary items purchased together into a bundle of one or more ancillary items by assigning a bundle-identification to each of the one or more ancillary bundles(406)

Identifying one or more existing customers, and one or more new customers of the one or more customers based on the received historical data, wherein each of the one or more existing customers are identified based on a customer identification who has one or more ancillary items, or one or more ancillary bundles purchase history(408)

A

FIG. 4A

400

(A)

Segmenting each of the one or more existing customers into one or more segments based on a Similar Preferred Bundles Customer Segmentation (SPBCS) technique (410)

Ranking each of the one or more bundles of the one or more ancillary items for each of the one or more segments of one or more existing customers using SCBPR-LTR technique and obtain top-k ranked ancillary bundles for each segment of one or more existing customers (412)

Pricing the top-k bundles of ancillary items for each of the one or more segments of one or more existing customers using SCOBP technique (414)

Constructing top-k ancillary bundle offers by jointly optimizing the outputs of SCBPR-LTR technique and SCOBP technique considering customer ancillary bundle preferences and revenue maximizing optimal bundle prices for each of the one or more segments of one or more existing customers (416)

Recommending the jointly optimized top-k bundles of ancillary items to each of the one or more segments of one or more existing customers (418)

FIG. 4B

FIG. 5

600

Segments unique set of
ancillary bundles purchase
data matrix E

| Segment | Bundles purchased |
|---------|-------------------|
| $s_1$ | $b_2$ |
| $s_2$ | $b_1, b_3$ |
| $s_3$ | $b_3$ |

bundles

| Segment | $b_1$ | $b_2$ | $b_3$ |
|---------|-------|-------|-------|
| $s_1$ | NP | P | NP |
| $s_2$ | P | NP | P |
| $s_3$ | NP | NP | P |

$s_1 : >_{s1}$

bundles

| bundles | $b_1$ | $b_2$ | $b_3$ |
|---------|-------|-------|-------|
| $b_1$ | | + | ? |
| $b_2$ | - | | - |
| $b_3$ | ? | + | |

$s_2 : >_{s2}$

bundles

| bundles | $b_1$ | $b_2$ | $b_3$ |
|---------|-------|-------|-------|
| $b_1$ | | - | ? |
| $b_2$ | + | | + |
| $b_3$ | ? | - | |

$s_3 : >_{s3}$

bundles

| bundles | $b_1$ | $b_2$ | $b_3$ |
|---------|-------|-------|-------|
| $b_1$ | | ? | + |
| $b_2$ | ? | | + |
| $b_3$ | - | - | |

Segments relative
preference data

| Segment | P | NP |
|---------|-----|-----|
| $s_1$ | $b_2$ | $b_1$ |
| $s_1$ | $b_2$ | $b_3$ |
| $s_2$ | $b_1$ | $b_2$ |
| $s_2$ | $b_3$ | $b_2$ |
| .... | .... | .... |

... denotes further columns

FIG. 6

700

Historical
purchase data

MLP classifier model

Trained model that Predict the Probability of
purchase at a given price

**Pricing parameter estimation using MLP**

Output of SPBCS method
and SCBPR-LTR method

Segment/group +
Customer Feature vector +
top-k ranked ancillary
bundles

Optimization Algorithm: Dual Annealing
Input : Initial price guess and price bound for
bundles
Objective function : Revenue=Probability of purchase
from MLP (Trained model) x ancillary bundle price
Stopping criterion : Maximum number of iteration

Optimal Price for top-
k ranked ancillary bundles

Store the output into
the Ancillary bundled
offers recommendation
system database.

**Finding optimal price that maximizes revenue**

SCOBP
Database

FIG. 7

# EP 4 586 174 A1

800

**Existing customer?** — No / Yes

**New Customer Handling**

Identify existing customer feature vector $f_{ext}$ that matches new customer feature vector $f_{new}$ using cosine similarity

Identifying existing customers that matches with identified existing customer feature vector $f_{ext}$ and Mapping the identified customers to segments obtained using SPBCS method

Obtain ranked ancillary bundles and their ranking scores for identified segments using SCBPR-LTR method

**Is historical data -bundles purchase data?** — Yes / No

Identify the segment S of this customer U from the segments, along with their side features obtained using SPBCS method.

Convert items purchase data into bundles purchase data

Historical ancillaries purchase data

ABORS_DB

Sort the obtained ranked ancillary bundles based on the ranking score and obtain the top-k ranked ancillary bundles. These top-k ancillary bundles act as our new group $g_{new}$.

Obtain top-k ranked ancillary bundled products/services recommendation using SCBPR-LTR method

Obtain optimal top-k bundles' prices for segment /group using SCOBP method

Construct and recommend jointly optimized top-k ancillary bundle offers

**FIG. 8**

28

**EUROPEAN SEARCH REPORT**

Application Number

EP 24 22 3596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/323727 A1 (BATRA VISHAL SINGH [IN] ET AL) 20 December 2012 (2012-12-20) | 1-5,8-15 | INV. G06Q30/0202 |
| Y | * paragraph [0003] - paragraph [0005] * | 6,7 | G06Q30/0204 |
| | * paragraph [0015] * | | G06Q30/0251 |
| | * paragraph [0017] - paragraph [0018] * | | G06Q30/0601 |
| | * paragraph [0021] * | | |
| | * paragraph [0024] * | | |
| | * paragraph [0026] - paragraph [0029] * | | |
| | * paragraph [0031] * | | |
| | * paragraph [0035] * | | |
| | ----- | | |
| Y | US 2023/153703 A1 (NATARAJAN VIJAYARANGAN [IN] ET AL) 18 May 2023 (2023-05-18) | 6 | |
| A | * claims 1-6 * | 1-5,7-15 | |
| | ----- | | |
| Y | CN 111 611 472 A (UNIV TSINGHUA) 1 September 2020 (2020-09-01) | 7 | |
| A | * paragraph [0004] * | 1-6,8-15 | |
| | * paragraph [0007] - paragraph [0009] * | | |
| | * paragraph [0013] * | | |
| | * paragraph [0018] * | | TECHNICAL FIELDS SEARCHED (IPC) |
| | * paragraph [0035] - paragraph [0036] * | | |
| | * paragraph [0057] * | | G06Q |
| | * paragraph [0059] - paragraph [0062] * | | |
| | * paragraph [0068] * | | |
| | * paragraph [0071] * | | |
| | * paragraph [0107] - paragraph [0108] * | | |
| | * paragraph [0121] * | | |
| | * paragraph [0123] * | | |
| | * paragraph [0127] * | | |
| | ----- | | |

The present search report has been drawn up for all claims

| Place of search | Date of completion of the search | Examiner |
|---|---|---|
| Munich | 14 April 2025 | Bharucha, Zubin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3596

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | | Publication date |
|---|---|---|---|---|
| US 2012323727 A1 | 20-12-2012 | US | 2012239515 A1 | 20-09-2012 |
| | | US | 2012323727 A1 | 20-12-2012 |
| US 2023153703 A1 | 18-05-2023 | EP | 4181039 A1 | 17-05-2023 |
| | | US | 2023153703 A1 | 18-05-2023 |
| CN 111611472 A | 01-09-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421002291